# EUROPEAN PATENT APPLICATION

(11) **EP 1 775 104 A1**
(43) Date of publication of application: **18.04.2007**
(21) Application number: 06252983.9
(22) Date of filing: 09.06.2006
(51) Int. Cl.: B29C 67/00, B22F 3/105

(54) **Method for enhancing density of a three-dimensional object**

(30) Priority: 14.10.2005 US 251327
(71) Applicant: Northrop Grumman Corporation, Los Angeles, CA 90067-2199 (US)
(72) Inventor: Husmann, Christopher H., Gardena California 90249 (US); Stein, Gregory N., Moreno Valley California 92557 (US)
(74) Representative: Mackenzie, Andrew Bryan

(57) **Abstract**

A manufacturing method is provided for enhancing density of a three-dimensional object defining at least one or more substantially flat surfaces. The method comprises the steps of: (a) applying a layer of powder (32) at a target plane (34); (b) completely melting selected locations of the layer corresponding to a cross sectional slice of the object, the cross sectional slice defining a portion of the flat surface; and (c) repeating steps (a) and (b) to create successive layers to form the flat surface of the object (42) in layerwise fashion, wherein at least one flat surface is oriented at an angle with respect to the target plane to mitigate against "burn through," warping, and "swelling" of the object. The complete melting of the powder and the orientation of the flat surface tend to provide dimensional accuracy, homogenous microstructure, and enhanced strength characteristics for the object.

## Description

### CROSS-REFERENCE TO RELATED APPLICATIONS

Not Applicable

### STATEMENT RE: FEDERALLY SPONSORED RESEARCH/DEVELOPMENT

Not Applicable

### BACKGROUND OF THE INVENTION

The present invention relates generally to graphic prototyping, and more specifically, to a selective laser sintering process that is uniquely adapted to yield fully dense parts.

In today's world of rapid prototype selective laser sintering, production of quality parts faces certain challenges. First, parts and/or other details made of nylon typically exhibit poor strength properties due to their low density levels, which commonly fall around 60% density. The resulting strength characteristics of such parts are below the rigorous requirements for flight quality performance parts. In addition, despite careful design and consistent production, parts produced utilizing selective laser sintering may not possess uniform strength characteristics throughout the part. When analyzed, sintered parts may often exhibit varying densities across the part, which results in non-uniform and inconsistent strength characteristics. Therefore, even though a part may meet density requirements, the microstructure of the part may exhibit varying strength properties, which may result in unpredictable and unacceptable performance. Indeed, in order to produce parts that may be useful for applications such as aerospace, manufacturing, and the like, the part density and the uniformity/consistency of the parts created through selective laser sintering must improve.

Traditional selective laser sintering was developed in the early 1990's and soon became an alternative manufacturing process through which complex parts could be created. Selective laser sintering became a viable alternative for forming plastic parts because of its cost effectiveness, speed, and simplicity relative to other processes such as injection molding, blow molding, machining, and the like. Through this process, various plastics could be formed into complex part designs. Additionally, the parts designs may be communicated to the selective laser sintering apparatus directly from the corresponding computer model. Thus, through selective laser sintering, a three-dimensional complex part could be formed with substantial benefit to the user.

The selective laser sintering process involves several steps. First, a powder material is selected which exhibits desired material properties. Various considerations, such as the melting temperature, the softening temperature, the material density, and the diameter of the particles of the powder, are all important selection criteria. Various inventions and compositions directed to specifically formulated sintering powders have been developed, which yield respective advantageous properties.

An apparatus utilized to perform selective laser sintering typically includes a vertically movable piston, a rolling mechanism, and a laser control mechanism, all of which are housed within a temperature controlled environment of the apparatus. In order to produce the part, the roller mechanism deposits a layer of powder onto the piston. This area onto which the powder is deposited is also known as the part bed. The thickness of the layer of powder may be approximately 125 micrometers thick, but may vary. The layer of powder is then sintered utilizing the laser control apparatus. Sintering may be defined as heating the powder to a temperature whereat contiguous surfaces of the individual particles of the powder are melted together through viscous flow, with at least a portion of each of the individual particles remaining solid. Therefore, within the apparatus, the laser control mechanism directs laser energy toward the layer of powder until sintering occurs. The laser control mechanism may sinter the powder in precise geometrical configurations. Upon finishing the sintering scan of the layer, a first slice is formed, meaning a first cross-sectional region of the part.

Subsequent to formation of the first slice, the piston is lowered and the roller mechanism distributes a subsequent layer of powder onto the part bed. The laser control apparatus then sinters the subsequent layer according to a corresponding subsequent cross-section for the part. As these steps are repeated, and additional slices are formed, the slices become sintered and united into a single coherent part. Particles of powder adjacent the surfaces of the part must not be sintered or heated to their melting temperature so that when the part is removed from the part bed, excess powder may be easily dislodged from the parts surface and reused in subsequent sintering processes. If particles of the powder adjacent to the boundaries of each of the slices are heated to their melting temperature, these particles may adhere to the slice and other particles, which results in a loss of part definition.

However, one of the drawbacks of present selective laser sintering processes has not been addressed by recent developments. Specifically, the selective laser sintering process typically creates parts that are less than fully dense, which in turn limits the applications in which selective laser sintered parts may be used. The term "fully dense" may refer to a part that has no measurable porosity or has reached 99.5% of the theoretical density of that material. The term "near fully dense" refers to a porous part that has a density that is 80-95% of a fully dense part. During the sintering process, due to the interstitial spacing of the particles of the powder, fully dense parts are difficult to achieve. Many applications have been directed towards powders and methods that seek to fill these interstices so as to enhance the density and consistency or uniformity of the part. However, such powders result in additional expense, complexity, and do not guarantee the creation of a fully dense part.

Due to the interstitial gaps and resulting porosity of sintered parts, the strength properties of such parts are typically inferior to the corresponding strength properties of isotropic parts. For example, such critical properties as tensile strength, compression, hardness, stress, elasticity, and the like, limit the range of applications in which sintered parts may be used. Specifically, one such application includes flight quality parts. In this application, the strength property requirements for parts are very demanding and may preclude the use of non-fully dense parts.

Therefore, there is a need in the art for a repeatable, reliable selective laser sintering process that produces parts that are fully dense. There is also a need in the art for a process that produces parts that have uniform and consistent density levels. There is a need in the art for an efficient, cost-effective, selective laser sintering process that produces a homogeneous part microstructure. Additionally, there is a need it the art for a selective laser sintering process which produces fully dense parts that meet specific dimensional requirements.

### BRIEF SUMMARY OF THE INVENTION

A manufacturing method is provided for enhancing density of a three-dimensional object defining at least one or more substantially flat surfaces. The method comprises the steps of: (a) applying a layer of powder at a target plane; (b) completely melting selected locations of the layer corresponding to a cross sectional slice of the object, the cross sectional slice defining a portion of the flat surface; and (c) repeating steps (a) and (b) to create successive layers to form the flat surface of the object in layerwise fashion, wherein at least one flat surface is oriented at an angle with respect to the target plane.

According to an aspect of the present invention, all of the flat surfaces of the object may be oriented at an angle with respect to the target plane. Preferably, a given flat surface may be oriented at an angle between 10 to 45 degrees with respect to the target plane. The object may be variously configured to include a plurality of flat surfaces, and such flat surfaces may be an exterior surface of the object or an interior surface of the object.

Step (b) of the method may include directing energy onto the layer to liquefy the selected locations thereof. In this regard, a laser may be used to direct between 45 to 60 Watts of energy onto the layer. Due to the fluence (power per unit area) of the laser, the complete melting of the powder may be facilitated. However, it is contemplated that other parameters may also be modified in order to achieve complete melting of the powder. For example, the layer may be between 0.003 to 0.006 in. in thickness. Also, the scan spacing may be within the range of 0.010 and 0.014 in. Finally, the scan count may be modified, but may preferably be 2.

In a further aspect of the present invention, the cross sectional slice of the object may define a cross sectional periphery, and step (b) may further include offsetting the selected locations from the cross sectional periphery corresponding to an offset value. This modification may aid in mitigating against "swelling" of the part as described below.

As it is contemplated that the configuration and mapping of the layer may be done via computer programs, other steps may be utilized in performing an implementation of the present method. For example, the method may further include the steps of: (a) identifying the flat surface of the object; (b) orienting a model of the object such that at least one flat surface thereof is oriented at an angle with respect to the target plane; and (c) dividing the model into a plurality of cross sectional slices, each of the slices being oriented parallel with respect to the target plane. Upon completion of these steps, the model may be reviewed in order to determine whether an optimal cross sectional slice for each layer is achieved. Such a determination may be made by each individual operator and take into consideration design requirements and other specifications related to a given project.

In accordance with another embodiment of the present invention, a manufacturing method is provided for enhancing density of a three-dimensional object defining a substantially flat dominant surface. The method comprises the steps of: (a) applying a layer of powder at a target plane; (b) completely melting selected locations of the layer corresponding to a cross sectional slice of the object, the cross sectional slice defining a portion of the dominant surface; and (c) repeating steps (a) and (b) to create successive layers to form the dominant surface of the object in layerwise fashion, wherein the dominant surface is not aligned parallel with respect to the target plane.

The dominant surface may be variously classified. For example, the object may define a plurality of substantially flat surfaces each defining a respective individual surface area and the dominant surface may define the largest individual surface area of the substantially flat surfaces. The dominant surface may be an exterior surface or an interior surface.

In yet another embodiment of the present invention, a manufacturing method is provided for enhancing density of a three-dimensional object defining at least one or more substantially flat surfaces, with each of the substantially flat surfaces being classifiable as a major or minor surface. The method comprises: (a) applying a layer of powder at a target plane; (b) completely melting selected locations of the layer corresponding to a cross sectional slice of the object, the cross sectional slice defining a portion of a given flat surface; and (c) repeating steps (a) and (b) to create successive layers to form the given flat surface of the object in layerwise fashion, wherein each of the major surfaces is not aligned parallel with respect to the target plane.

The major and minor surfaces may be variously classified. For example, each of the substantially flat surfaces may define an individual surface area and collectively define a cumulative flat surface area. In such a case, the surface area of a given minor surface may be less than 10% of the cumulative flat surface area or less than 5% of the cumulative flat surface area. The major and minor surfaces may be an interior surface or an exterior surface of the object.

### BRIEF DESCRIPTION OF THE DRAWINGS

An illustrative and presently preferred embodiment of the invention is shown in the accompanying drawings in which:
Figure 1 a schematic diagram, in side view, of a manufacturing apparatus for with an initial layer of powder applied at a target plane according to an embodiment of the present invention;
Figure 2 is a schematic diagram, in side view, of the apparatus having created an object according to another embodiment of the present invention;
Figure 3a is a side view of an object fabricated with a flat surface being aligned with the target plane;
Figure 3b is a side view of an object fabricated with a flat surface being oriented at an angle, or at least not aligned parallel with the target plane, in accordance with another embodiment of the present invention;
Figure 4 is a top plan view of an object in accordance with another embodiment of the present invention.

Figure 5 is an enlarged side view of an aspect of the object shown in Figure 3 highlighting the layerwise creation of the flat surface in accordance with another embodiment of the present invention.

### DETAILED DESCRIPTION OF THE INVENTION

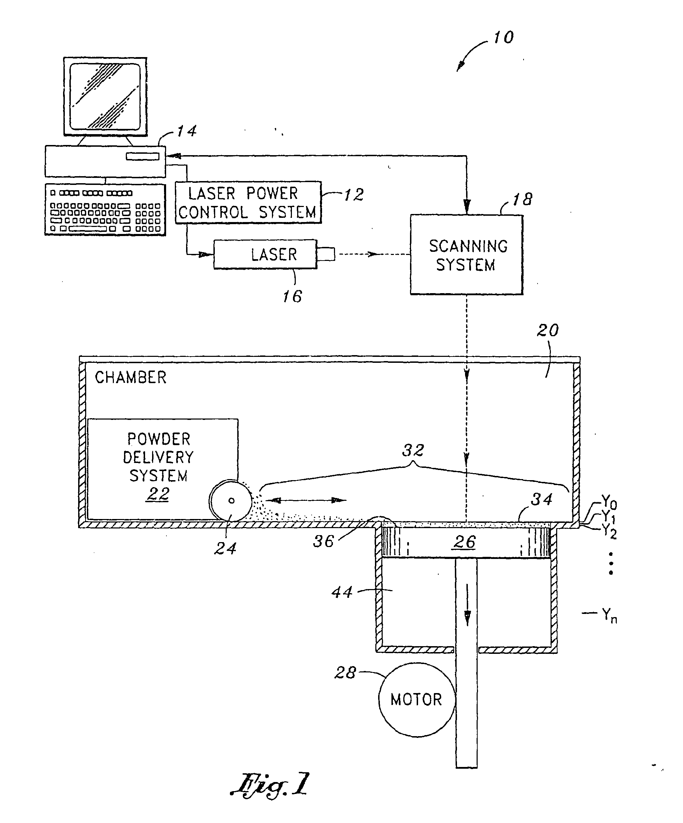

Referring now to the drawings wherein the showings are for purposes of illustrating a preferred embodiment of the present invention only and not for purposes of limiting the same, Figure 1 is a side view of a manufacturing apparatus 10 operative to perform various embodiments of the present method. As shown in Figure 1, the laser power control system 12 includes a user interface 14, such as a computer, a laser 16, and a scanning system 18, each being in electronic communication with one another. The apparatus 10 further includes a part chamber 20, a powder delivery system 22, a roller 24, and a part piston 26 mechanically coupled to a motor 28. The roller 24 is configured to apply a layer 30 of powder 32 at a target plane 34. The part piston 26 defines an upper surface 36 which lies within the target plane 34 at the commencement of a build operation. After the layer 30 of powder 32 is applied at the target plane 34, the laser 16 may selectively melt selected portions 38 thereof corresponding to a cross sectional slice 40 of an object 42 to be formed. Once the laser 16 completely melts those selected portions 38, the piston 26 will be lowered corresponding to a predetermined value, and another layer 30 of powder 32 will be applied at the target plane 34. As this process continues, the object 42 is fabricated layer by layer in what may be referred to as the build area 44 or part bed 44.

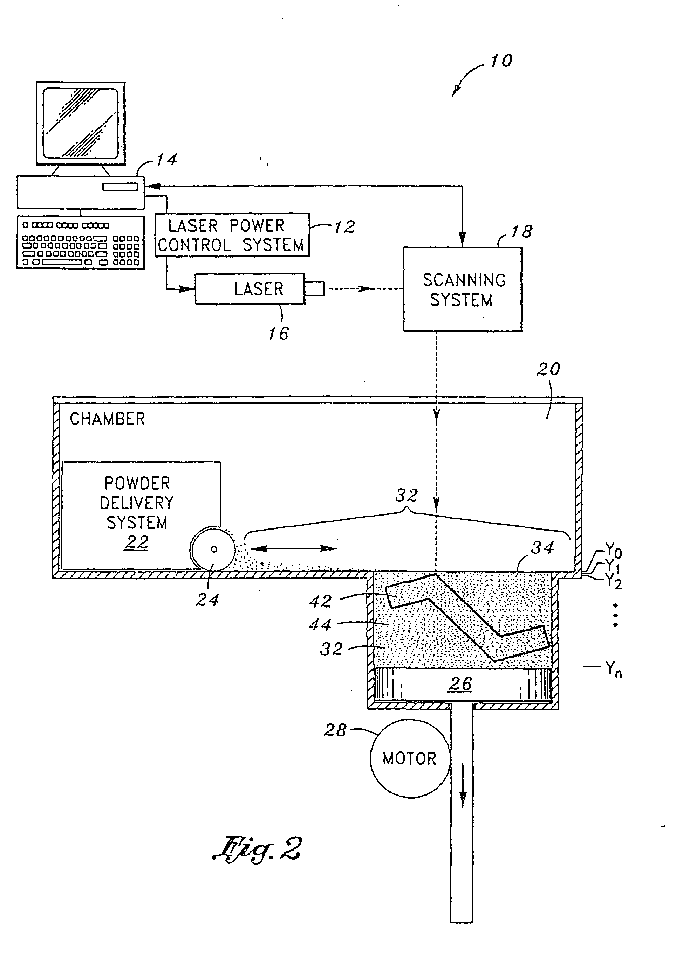

According to an aspect of the present invention, a manufacturing method is provided for enhancing density of the three dimensional object 42 defining at least one or more substantially flat surfaces 46. The method comprises of steps: (a) applying the layer 30 of powder 32 at the target plane 34; (b) completely melting the selected locations of the layer 30 corresponding to the cross sectional slice 40 of the object 42, the cross sectional slice 40 defining a portion of the flat surface 48; and (c) repeating steps (a) and (b) to create successive layers 30 to form the flat surface 46 of the object 42 in layerwise fashion, wherein at least one flat surface 46 is oriented at an angle with respect to the target plane 34. As shown in Figure 2, it is contemplated that upon completion of an implementation of the present invention, at least one flat surface 46 of the object 42 created thereby may be oriented at an angle with respect to the target plane 34.

A first inventive aspect of an embodiment of the present method includes the complete melting of the powder 32 in order to achieve a near-fully dense, if not fully dense object 42 (referred to herein as "part" or "object 42"). Traditional rapid prototyping processes, such as selective laser sintering, utilize a similar apparatus as described herein with the exception of utilizing lower laser fluence. Sintering, by definition, is a process of forming objects from a powder by heating the powder at a temperature below its melting point. The addition of laser energy is sufficient to cause the exterior of the particles to become viscous while the interior of the particles remains solid. The viscous exterior allows the particles to fuse to each other and thereby form a sintered part. As a result of the sintering process, such parts typically demonstrate interstitial gaps or porosity, and may achieve, albeit rarely, a maximum density of up to 95% of theoretical density. In addition, the microstructure of sintered parts is clearly layered, which may also compromise the structural integrity of the parts. Therefore, although these processes may create parts that are dimensionally accurate, such parts are not structurally sound and are therefore typically used only as models. Thus, these processes do not create a "flight quality" part-one that is not only dimensionally accurate, but also demonstrates the strength properties required for a given application. In contrast, implementations of the present invention are consistent and repeatable processes that create parts exhibiting strength properties of a near fully dense or fully dense part due in part to the complete melting of the powder. Complete melting of the powder also tends to eliminate other microstructural problems associated with layerwise fabrication of parts. In particular, complete melting of the part tends to create a homogenous (not layered) microstructure. As a result, the strength properties of completely melted parts are much greater than their selective laser sintered counterparts. Finally, completely melted parts are also able to achieve up to 99.5% of theoretical density.

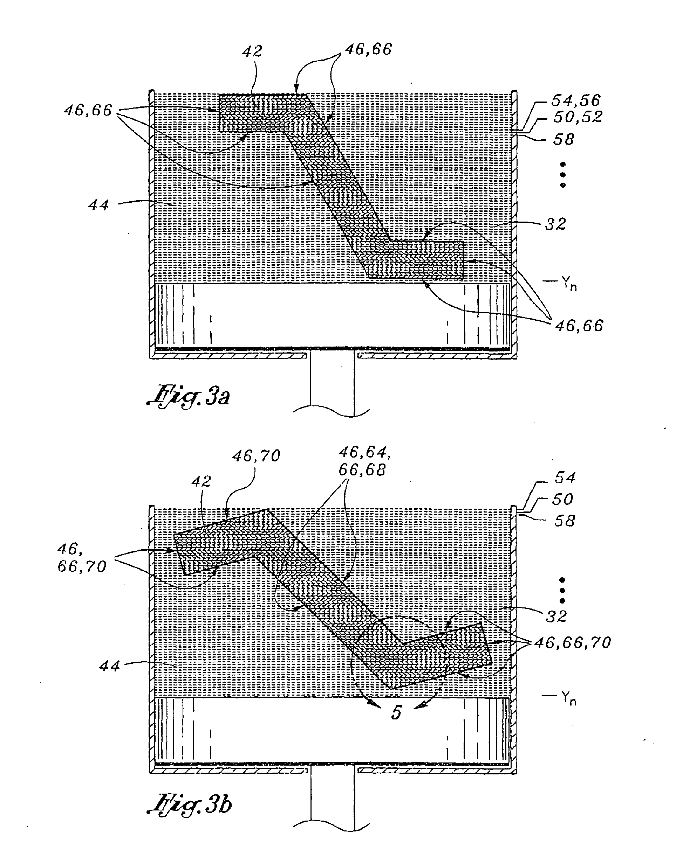

Another inventive aspect of an embodiment of the present invention, as shown in Figures 2 and 3b, includes the orientation of the flat surfaces 46 of the object 42, either at an angle or at least not horizontally aligned, with respect to the target plane 34. This orientation results, among other things, in two principle benefits. First, in order to facilitate complete melting of the powder 32, the laser power or laser fluence (laser power per unit area) may be increased. However, an increase in laser power may often result in laser 16 "burn through" and a corresponding loss of dimensional accuracy. "Burn through" includes the undesired melting of the powder 32 immediately below or adjacent to the selected locations of the layer 30 the laser 16 due to the laser's high power or fluence.

Secondly, the aforementioned orientation also tends to mitigate against warping of flat surfaces 46. Upon melting the selected portions 38 of the layer 30, differences in the weight and density of the selected portions 38 and the powder 32 below or around the selected portions 38, may cause warping. Indeed, if not properly supported by the surrounding powder 32, the selected portions 38 (as well as the part in general) may warp. Through small incremental advances in the horizontal direction coupled with advances in the vertical direction, the selected portions 38 of each successive layer 30 may be supported by the melted selected portions 38 of the layers 30 therebelow.

Therefore, as mentioned above, in order to mitigate against "burn through" and to enhance dimensional accuracy and proper fabrication of the object 42-the successive layers 30 of the object 42 are created with the flat surface 46 of the object 42 defined thereby being oriented at an angle with respect to the target plane 34.

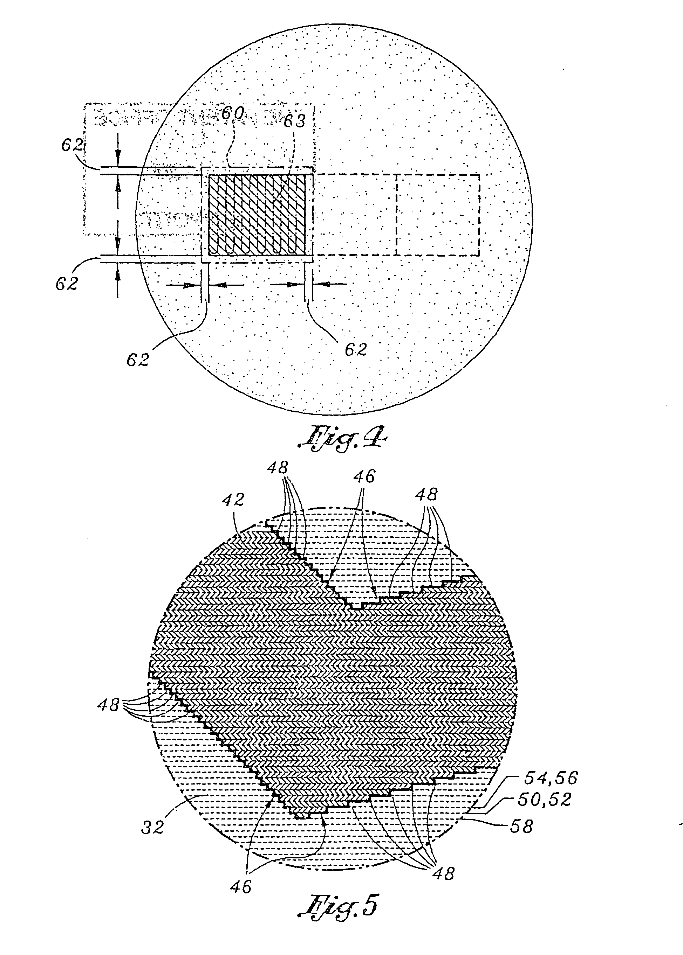

Referring now to Figures 3a and 3b, an example of the orientation of the flat surfaces at an angle with respect to the target plane 34 is provided. As shown in Figure 3a, "burn through" may occur where the laser 16 melts an initial layer "Y" (shown by reference number 50) corresponding to a relatively small cross sectional slice 52, and immediately thereafter melts another layer "X" (shown by reference number 54) corresponding to a relatively larger cross sectional slice 56. In this case, the melting of the powder 32 corresponding to layer "X" 54 and its larger cross sectional slice 56 may result in "burn through" down through layers "Y" 50 and "Z" (shown by reference number 58). Therefore, according to an aspect of the present invention, "burn through" may be mitigated, if not eliminated, by orienting the flat surface 46 in layer "X" 54, to be at an angle with respect to the target plane 34, as shown in Figures 3b and 5. As shown in Figure 5, orienting the flat surface 46 at an angle with respect to the target plane 34 (which as shown in Figure 5, may typically also be equivalent to orienting the flat surface not aligned with respect to each layer 30) may effectively mitigate "burn through" because the flat surface 46 is created through small incremental advances in the horizontal direction coupled with advances in the vertical direction. Thus, as shown in Figure 3b for example, laser energy directed at the selected portions 38 of layer "X" may dissipate into already melted layers "Y" and "Z" below. Without such an orientation, as shown in Figure 3a, the laser energy directed toward layer "Z" would likely "burn through" to lower layers. Therefore, the orientation provides for incremental horizontal and vertical layerwise advances that tend to mitigate "burn through."

According to an aspect of the present invention, the completely melting step may include directing energy onto the layer 30 to completely melt the selected locations thereof. Thus, as shown in Figure 1, the energy may be directed from the laser 16 through a scanning system 18. It is contemplated that the laser 16 may be a CO₂ laser 16. Further, it is contemplated that the laser 16 may be used to direct between 45 and 60 Watts of energy onto the layer 30. Such energy usage is considerable greater than traditional rapid prototyping counterparts. As may be appreciated by one of skill in the art, in order to completely melt the powder 32, the energy may be increased corresponding to characteristics and properties of the powder 32. For example, the density, melting temperature, particle size, and other characteristics and properties may be considered. In addition, other considerations such as whether the powder 32 has been used in previous build operations, may require a greater amount of energy from the laser 16 in order to achieve complete melting. Thus, although 45-60 Watts may be a preferred range, it is contemplated that the laser 16 may direct more power depending on the powder 32 properties.

The powder 32 may be an amorphous powder 32, an organic polymer, or a metal. The powder 32 material may be selected according to the strength properties required by a given application. Implementations of the present invention have been determined to provide density levels consistently at 99.5% of theoretical density, in other words, full density. Therefore, a "flight quality" part may be produced utilizing implementations of the present invention. It is contemplated that implementations of the present invention may be utilized to provide a viable alternative to the costly manufacture of parts through injection molding or machining. The potential savings in manufacturing costs may be significant, especially when only a limited number of parts are required. Thus, through implementations of the present invention, "flight quality" parts may be produced without incurring the expense of a costly injection mold or machine expenses.

A further advantageous aspect of the present invention includes enhancing the microstructure of the object 42. Through the complete melting of the powder 32, the object 42 microstructure becomes homogenous. This is achieved through placing the powder 32 into a stable state through the melting process. Thus, by deliberately and completely melting the powder 32 corresponding to the each cross sectional slice 40 at each layer 30, the resulting part will have been manufactured by transitioning from a solid to a liquid and back to a solid, upon cooling.

Embodiments of the present invention tend to ensure microstructure homogeneity, i.e., that no interstitial gaps of air exist in the part and that the part does not have the microstructure weaknesses of one constructed in layerwise fashion. As is known in the art, interstitial gaps or porosity may decrease the strength properties of the object 42. In addition, a layerwise microstructure may allow the part to exhibit poor strength properties in shear, bending, and other stresses. However, according to aspects of the present invention, even though the part is fabricated in a layerwise fashion, the microstructure of the part does not exhibit properties of layerwise fabrication. Therefore, the part exhibits strength properties comparable to a part of the same configuration, for example, that is machined from a single block of homogenous solid material or injection molded.

As mentioned above, traditional rapid prototyping processes such as selective laser 16 sintering, create parts that exhibit a clearly layered microstructure and have correspondingly weak strength properties. Further, such parts are not near fully dense or fully dense. In contrast, the complete melting of the selected locations corresponding to a cross section of the object 42 ensures that successive cross sectional slices 40 of the object 42 completely melt and facilitate the creation of a homogenous microstructure. Additionally, the complete melting of each cross sectional slice 40 tends to ensure that the object 42 has uniform properties throughout, which may be advantageous over not only selective laser 16 sintering, but also over injection molding.

Referring again to Figure 3b, upon completion of an implementation of the present method, the object 42 may be surrounded by powder 32 within the build area 44 or part bed 44. As described above, it is contemplated that at least one flat surface 46 may be oriented at an angle with respect to the target plane 34. Additionally, the flat surface 46 may be oriented at an angle with respect to a given layer 30. In this manner, the "burn through" of the powder 32 may be mitigated. As may be appreciated by one of skill in the art, the object 42 may be of diverse configurations. For example, the object 42 may be a solid mass with very little external detail, such as a cube or a cylinder. However, the object 42 may also have a very detailed configuration that includes internal cavities, ducks, holes, flanges, perforations, and internal or external designs, as well as any other various possibilities which create a detailed part. Therefore, the flat surface 46 referred to above may be an exterior surface or an interior surface of the object 42. As mentioned previously, it is contemplated that the flat surface 46 may be substantially flat. In this regard, the flat surface 46 may be one that has a slight curve or indentation therein. It is contemplated that upon cooling, a substantially flat surface 46 may be one that is formed when the object 42 shrinks in various dimensions, resulting in partial warping of a surface that was intended to be substantially flat. However, the substantially flat surface 46 may also be, as mentioned previously, a surface that by design includes inward or outward curvature. Additionally, the flat surface 46 may include geometric configurations such as a flat edge. For example, the flat edge may be a straight line extending between two opposing ends of a cylinder. If this cylinder were to be manufactured utilizing an implementation of the present method, the edge of the cylinder should be oriented at an angle with respect to the target plane 34.

According to a preferred embodiment of the present invention, the flat surface 46 may be oriented at an angle between 10 and 45 degrees with respect to the target plane 34. Additionally, it is contemplated that the angle may be any angle up to 90 degrees with respect to the target plane 34. The determination of the angle may be dictated by the geometry or configuration of the part to be manufactured.

As illustrated in Figure 4, the cross sectional slice 40 of the object 42 may define a cross sectional periphery 60, and the completely melting step may further include offsetting the selected locations from the cross sectional periphery 60 corresponding to an offset value 62. The complete melting of the powder 32 may create a problem known as "swelling," in which the part may accumulate extra powder 32 at the surface of the part due to the high temperature of the melted powder 32. In order to mitigate against "swelling," the selected locations of the cross sectional slice 40 may be offset from the cross sectional periphery 60. The offset value 62 may be determined based on the melting temperature, density, and other characteristics of the powder 32. Thus, it is contemplated that the use of different powder 32 materials may require different offset values 62. Further, it is contemplated that different geometric configurations of the object 42 may also require different offset values 62. Specifically, a given part may have various offset values 62 depending on the configuration of the selected locations of the layer 30 as well as the overall exterior and interior configuration of the object 42. In addition, the method may include outlining the cross sectional periphery 60 of the cross sectional slice 40 in order to mitigate against "swelling" and to create a dimensionally accurate part. The outlining of the cross sectional periphery 60 may be done before or after the cross sectional slice 40 is melted by the laser 16. As also shown in Figure 4, the path 63 of the laser 16 is determined by scan count, scan spacing, and scan speed of the laser 16.

According to another aspect of the present invention, the layer 30 may be between 0.003 to 0.006 in. in thickness. According to a preferred embodiment of the present invention, the layer 30 is 0.004 in. in thickness. It is contemplated that the layer 30 thickness may be modified depending on the configuration of the object 42, such as the cross sectional slice 40, and the properties of the powder 32, such as melting point, powder density, and the density of the material(s) from which the powder 32 is made.

The completely melting step (b) may further include modifying parameters such as scan count, scan spacing, and scan speed of the laser 16. According to a preferred embodiment of the present invention, the scan spacing may be between 0.010 to 0.014 in., and the scan count may be 2. Other parameters such as temperature within the part chamber 20 and roller speed may be manipulated to enhance the performance of implementations of the present method. For example, as may be appreciated by one of skill in the art, the selective laser sintering process often seeks to heat the powder within the part chamber to a temperature near the "softening" end temperature of the powder such that the powder may be easily sintered by a low powered laser, but without causing the powder to "cake" (or stick to itself or the part bed) upon being spread across the part bed by the powder distribution system. However, according to an implementation of the present method, it may be unnecessary to precisely maintain the temperature of the part chamber 20 near the "softening" temperature of the powder 32. Instead, the part chamber 20 may be maintained at a temperature to ensure even spreading of the powder 32 at the target plane 34.

As illustrated in Figure 3b, upon completion, the object 42 will have been created through layerwise melting of the selected locations of each layer 30 corresponding to the cross sectional slice 40 of the object 42. As may be appreciated by one of skill in the art, the configuration of each cross sectional slice 40 of the object 42 may be calculated at the computer or user interface 14 through the use of computer-aided-design (CAD) or computer-aided-manufacturing (CAM) systems. In this regard, the method may further include the steps of: (a) identifying the flat surface 46 of the object 42; (b) orienting a model of the object 42 such that at least one flat surface 46 thereof is oriented at an angle with respect to the target plane 34; and (c) providing the model into a plurality of cross sectional slices 40, each of the slices 40 being oriented parallel with respect to the target plane 34. Upon completion of these steps, the computer may direct the laser 16 via the laser power control system 12 to completely melt the selected locations of each respective layer 30.

In another implementation of the present invention, a manufacturing method is provided for enhancing density of a three dimensional object 42 defining a substantially flat dominant surface 64. The method may comprise the steps of: (a) applying a layer 30 of powder 32 at a target plane 34; (b) completely melting selected locations of the layer 30 corresponding to a cross sectional slice 40 of the object 42, the cross sectional slice 40 defining a portion of the dominant surface 64; and (c) repeating steps (a) and (b) to create successive layers 30 to form the dominant surface 64 of the object 42 in layerwise fashion, wherein the dominant surface 64 is not aligned parallel with respect to the target plane 34.

Referring to Figure 3b, the dominant surface 64 may be variously defined. According to one embodiment, the object 42 may define a plurality of substantially flat surfaces 46 that each define a respective individual surface area 66. In this case, the dominant surface 64 may define the largest individual surface area 66 of the substantially flat surfaces 46. On the other hand, the dominant surface 64 may be defined as that surface which is more structurally or functionally critical to the object 42, thereby warranting increased care and attention to its manufacture. This may be evident from the application of the object 42, and it is contemplated that such a determination may be made by one of skill in the art. For the reasons mentioned above, by orienting the dominant surface 64 such that it is not aligned parallel with respect to the target plane 34, the problems of "burn through," warping, and "swelling" may be mitigated. Thus, the dimensional accuracy of the part may be enhanced at the dominant surface 64. As similarly described above, the dominant surface 64 may also be an interior surface or an exterior surface of the object 42.

According to another implementation of the present invention, a manufacturing method is provided for enhancing density of a three dimensional object 42 defining at least one or more substantially flat surfaces 46, each of the substantially flat surfaces 46 being classifiable as a major surface 68 or minor surface 70. The method may comprise the steps of: (a) applying a layer 30 of powder 32 at a target plane 34; (b) completely melting selected locations of the layer 30 corresponding to a cross sectional slice 40 of the object 42, a cross sectional slice 40 defining a portion of a given flat surface 46; and (c) repeating steps (a) and (b) to create successive layers 30 to form the given flat surface 46 of the object 42 in layerwise fashion, wherein each of the major surfaces 68 is not aligned parallel with respect to the target plane 34.

Referring to Figures 3a and 3b, the major surfaces 68 and minor surfaces 70 may also be variously defined. For example, each of the substantially flat surfaces 46 of the object 42 may define an individual surface area 66 and collectively define a cumulative flat surface area. In one example, the individual surface area 66 of a given minor surface 70 may be less that 10 percent of the cumulative flat surface area. However, it is contemplated that other ratios may be more advantageous depending upon the configuration of the object 42. Furthermore, the individual surface area 66 of the given minor surface 70 may be less than 5 percent of the cumulative flat surface area. Additionally, it is contemplated that the minor surface 70 may be classifiable as such because it is less critical to the structure and/or function of the object 42. The major surface 68 may be defined as one which has an individual surface area 66 greater that a certain percentage of the cumulative area. As with the minor surface 70, the percentage of the cumulative surface area may vary in determining whether a flat surface 46 is a major surface 68. Additionally, the criticality of the structure or function of a flat surface 46 may further determine whether such a surface is a major surface 68. It is further contemplated that there may be a plurality of major surfaces 68 not aligned parallel with respect to the target plane 34.

This description of the various embodiments of the present invention is presented to illustrate the preferred embodiments of the present invention, and other inventive concepts may be otherwise variously combined and implied. The appended claims are intended to be construed to include such variations except insofar as limited by the prior art.

## Claims

1. A manufacturing method for enhancing density of a three-dimensional object defining at least one or more substantially flat surfaces, the method comprising:
a) applying a layer of powder at a target plane;
b) completely melting selected locations of the layer corresponding to a cross sectional slice of the object, the cross sectional slice defining a portion of the flat surface; and
c) repeating steps a) and b) to create successive layers to form the flat surface of the object in layerwise fashion,
wherein at least one flat surface is oriented at an angle with respect to the target plane.

2. The method of Claim 1 wherein all of the flat surfaces of the object are oriented at an angle with respect to the target plane.

3. The method of Claims 1 or 2 wherein the flat surface is oriented at an angle between 10 to 45 degrees with respect to the target plane.

4. The method of Claim 1 wherein the flat surface is an exterior surface of the object.

5. The method of Claim 1 wherein the flat surface is an interior surface of the object.

6. The method of Claim 1 wherein step b) includes directing energy onto the layer to liquefy the selected locations thereof.

7. The method of Claim 2 wherein a laser is used to direct between 45 to 60 Watts of energy onto the layer.

8. The method of Claim 1 wherein the layer is between 0.003 to 0.006 in. in thickness.

9. The method of Claim 1 wherein the scan spacing is within the range of 0.010 and 0.014 in.

10. The method of Claim 1 wherein the scan count is 2.

11. The method of Claim 1 further including the steps of:
a) identifying the flat surface of the object;
b) orienting a model of the object such that at least one flat surface thereof is oriented at an angle with respect to the target plane; and
c) dividing the model into a plurality of cross sectional slices, each of the slices being oriented parallel with respect to the target plane.

12. The method of Claim 1 wherein the cross sectional slice of the object defines a cross sectional periphery, step b) further including offsetting the selected locations from the cross sectional periphery corresponding to an offset value.

13. A manufacturing method for enhancing density of a three-dimensional object defining a substantially flat dominant surface, the method comprising:
a) applying a layer of powder at a target plane;
b) completely melting selected locations of the layer corresponding to a cross sectional slice of the object, the cross sectional slice defining a portion of the dominant surface; and
c) repeating steps a) and b) to create successive layers to form the dominant surface of the object in layerwise fashion,
wherein the dominant surface is not aligned parallel with respect to the target plane.

14. The method of Claim 13 wherein the object defines a plurality of substantially flat surfaces each defining a respective individual surface area and the dominant surface defines the largest individual surface area of the substantially flat surfaces.

15. The method of Claim 13 wherein the dominant surface is an exterior surface.

16. The method of Claim 13 wherein the dominant surface is an interior surface.

17. A manufacturing method for enhancing density of a three-dimensional object defining at least one or more substantially flat surfaces, each of the substantially flat surfaces being classifiable as a major or minor surface, the method comprising:
a) applying a layer of powder at a target plane;
b) completely melting selected locations of the layer corresponding to a cross sectional slice of the object, the cross sectional slice defining a portion of a given flat surface; and
c) repeating steps a) and b) to create successive layers to form the given flat surface of the object in layerwise fashion,
wherein each of the major surfaces is not aligned parallel with respect to the target plane.

18. The method of Claim 17 wherein each of the substantially flat surfaces define an individual surface area and collectively define a cumulative flat surface area, the surface area of a given minor surface being less than 10% of the cumulative flat surface area.

19. The method of Claim 17 wherein each of the substantially flat surfaces define an individual surface area and collectively define a cumulative flat surface area, the surface area of a given minor surface being less than 5% of the cumulative flat surface area.

20. The method of Claim 17 wherein the major surface is one of an interior surface or an exterior surface.
